# EUROPÄISCHE PATENTSCHRIFT

(11) **EP 2 731 749 B1**
(45) Veröffentlichungstag und Bekanntmachung des Hinweises auf die Patenterteilung: **22.02.2017**
(21) Anmeldenummer: 12734922.3
(22) Anmeldetag: 09.07.2012
(51) Int. Cl.: B23K 26/38, B23K 26/04

(54) **VERFAHREN ZUM BEARBEITEN EINES WERKSTÜCKS UND BEARBEITUNGSVORRICHTUNG**
METHOD AND DEVICE FOR MACHINING A WORKPIECE
MÉTHODE ET DISPOSITIF D'USINAGE D'UNE PIÈCE

(30) Priorität: 13.07.2011 DE 102011079083
(43) Veröffentlichungstag der Anmeldung: 21.05.2014
(73) Patentinhaber: Trumpf Werkzeugmaschinen GmbH + Co. KG, 71254 Ditzingen (DE)
(72) Erfinder: HAMMANN, Gerhard, 70825 Korntal-Münchingen (DE)
(74) Vertreter: Kohler Schmid Möbus Patentanwälte
(86) Internationale Anmeldenummer: PCT/EP2012/063364
(87) Internationale Veröffentlichungsnummer: WO 2013/007674

(56) Entgegenhaltungen:
- EP-A1- 1 716 960
- WO-A2-01/87534
- US-B2- 6 563 130

## Beschreibung

Die Erfindung betrifft ein Verfahren zum Bearbeiten eines Werkstücks mit einer Bearbeitungsvorrichtung, die einen mit definierter Geschwindigkeit beabstandet zur Werkstückoberfläche verfahrbaren Bearbeitungskopf aufweist sowie eine solche Bearbeitungsvorrichtung. Die Gattung zeigt die EP-A-1 716 960.

Zum Bearbeiten eines Werkstücks wird bei heutigen Bearbeitungsvorrichtungen der Arbeitsabstand eines Bearbeitungskopfs vom Werkstück zumeist kontinuierlich überwacht und auf einen fix vorgegebenen Soll-Arbeitsabstand geregelt. Der Bearbeitungskopf wird dazu während des Bearbeitungsprozesses entlang zumindest einer seiner Bewegungsachsen auf das Werkstück zu- oder von diesem wegbewegt.

Für ein optimales Bearbeitungsergebnis am Werkstück ist oftmals ein möglichst geringer Arbeitsabstand des Bearbeitungskopfs vom Werkstück gewünscht. Dies ist insbesondere beim thermischen Trennschneiden oder auch bei vielen Schweißanwendungen der Fall. Bei derartigen Bearbeitungsprozessen werden zudem oftmals z.T. kostspielige Prozessfluide, beispielsweise Inert- oder Aktivgase eingesetzt, deren Verbrauch mit zunehmendem Arbeitsabstand des Bearbeitungskopfs von den zu bearbeitenden Werkstücken steigt.

In der Praxis weisen die zu bearbeitenden Werkstücke häufig eine nicht vollflächig plane Oberfläche auf. So finden sich bei Blechen beispielsweise Oberflächenwelligkeiten, die beispielsweise von einem vorangehenden Fertigungsprozess der Bleche oder auch deren jeweiliger Anordnung in einer Werkstückaufnahme der eingesetzten Bearbeitungsvorrichtung herrühren können. Außerdem können die Bleche durch die Bearbeitung thermisch verformt werden. Auch können die Bleche in der Werkstückaufnahme mit ihrer Oberfläche gegenüber einer Bewegungsachse des Bearbeitungskopfs schief angeordnet sein.

In der industriellen Serienfertigung muss der Bearbeitungskopf zum Bearbeiten des Werkstücks aus Gründen der Wirtschaftlichkeit mit hoher Geschwindigkeit über das Werkstück bewegt werden. Insoweit kann der Bearbeitungskopf bei derartigen Anwendungen nicht ohne Weiteres mit einem geringen Arbeitsabstand von beispielsweise 0,3 mm vom Werkstück gegenüber dem Werkstück bewegt werden, zumal der Bearbeitungskopf auch bei hochdynamisch ausgelegten Systemen immer eine von der jeweiligen Bewegungsgeschwindigkeit abhängige Abweichung seiner Ist-Position von seiner Soll-Position, d.h. einen sogenannten Schleppabstand entlang seiner Bewegungsachsen, aufweist. Angesichts der variablen Oberflächentopographie der Werkstücke kann es daher bei einem zu gering bemessenen Soll-Arbeitsabstand des Bearbeitungskopfs vom Werkstück zu Kollisionen des Bearbeitungskopfs mit dem Werkstück kommen. Neben den sich daraus ergebenden unerwünschten Prozessabbrüchen kann dies zu Beschädigungen des Bearbeitungskopfs (z.B. der Fokussierlinse eines Laserbearbeitungskopfs) oder des Werkstücks führen. Dies ist für das Bearbeitungsergebnis wie auch die Wirtschaftlichkeit des Verfahrens wenig vorteilhaft.

Aufgabe der Erfindung ist es, ein eingangs genanntes Verfahren sowie eine Bearbeitungsvorrichtung anzugeben, die die genannten Nachteile überwinden und die insbesondere ein sicheres und gegenüber Prozessstörungen robustes Bearbeiten eines Werkstücks bei möglichst geringem Arbeitsabstand des Bearbeitungskopfs vom Werkstück ermöglichen.

Die das Verfahren betreffende Aufgabe wird durch ein Verfahren mit den im Patentanspruch 1 angegebenen Merkmalen und die die Bearbeitungsvorrichtung betreffende Aufgabe durch eine Bearbeitungsvorrichtung mit den im Patentanspruch 11 angegebenen Merkmalen gelöst.

Der mit dem erfindungsgemäßen Verfahren verbundene Vorteil besteht im Wesentlichen darin, dass die Bearbeitung des Werkstücks bei vorgegebener Bewegungsgeschwindigkeit des Bearbeitungskopfs gegenüber dem Werkstück (Bearbeitungsgeschwindigkeit) mit einem auf die tatsächliche Oberflächentopographie des Werkstücks ausgerichteten minimalen Soll-Arbeitsabstand des Bearbeitungskopfs vom Werkstück vorgenommen werden kann. Die Gefahr einer Kollision des Bearbeitungskopfs mit dem Werkstück kann dadurch zugleich insgesamt verringert und das Bearbeitungsergebnis, insbesondere bei Trennschneid- bzw. Schweißvorgängen, gegenüber einem zu groß gewählten Arbeitsabstand verbessert werden. Zugleich kann im Falle des Einsatzes eines Prozessfluids ein mit einem unnötig großen Abstand einhergehender (hoher) Verbrauch des Prozessfluids reduziert werden. In der Praxis eilt die tatsächliche Position des Bearbeitungskopfs entlang dessen vorgegebener Soll-Bearbeitungsbahn der steuerungsseitig jeweilig vorgegebenen Soll-Position des Bearbeitungskopfs auf der Soll-Bearbeitungsbahn nach. Die jeweilige Differenz des Lageistwerts des Bearbeitungskopfs vom Lagesollwert wird als Schleppabstand bezeichnet. Der Schleppabstand hängt von der Geschwindigkeit der Bewegung des Bearbeitungskopfs entlang dessen Bewegungsachsen sowie der sogenannten Geschwindigkeitsverstärkung K_{V} der Bearbeitungsvorrichtung ab. Die Geschwindigkeitsverstärkung K_{V} ist der maßgebende (lineare) Kennwert für das Verhalten des Regelkreises zur Bewegungssteuerung des Bearbeitungskopfs entlang seiner Bewegungsachsen. Dieser Kennwert gibt dabei das Verhältnis der Ist-Geschwindigkeit des Bearbeitungskopfs zum Schleppabstand an und ist somit ein Maß für die Abbildungstreue der Bearbeitungsvorrichtung beim Verfahren des Bearbeitungskopfs entlang von Kurven in einer Ebene oder im Raum. Die elektromechanischen Antriebssysteme heutiger Bearbeitungsvorrichtungen weisen diesbezüglich üblicherweise Geschwindigkeitsverstärkungen zwischen 10 und 80 · s⁻¹ bzw. bei hochdynamischen Bearbeitungsvorrichtungen zum Teil bis über 150 · s⁻¹ auf. Der jeweilige Schleppabstand des Bearbeitungskopfs ist für die bei der Bearbeitung des Werkstücks genutzten Bewegungsgeschwindigkeiten des Bearbeitungskopfs bei heutigen Bearbeitungsvorrichtungen bekannt und wird während des Bearbeitungsprozesses kontinuierlich überwacht.

Die Oberflächentopographie des Werkstücks kann erfindungsgemäß vor oder während des Bearbeitens des Werkstücks erfasst werden. In erstgenanntem Fall kann dies insbesondere durch Bestimmen der Lage von definierten Messpunkten (Referenzpunkten) der Werkstückoberfläche in Bezug auf ein durch Hauptbewegungsachsen (X-, Y-, Z-Achsen) des Bearbeitungskopfs definiertes Arbeitskoordinatensystem der Bearbeitungsvorrichtung erfolgen. Dadurch kann ein zeit- und rechenaufwändiges Erfassen der Oberflächentopographie des gesamten Werkstücks vermieden werden.

Das Erfassen der Oberflächentopographie des Werkstücks während der Werkstückbearbeitung bietet demgegenüber Zeitvorteile, da das Werkstück ohne Verzögerung bearbeitet werden kann.

Die Oberflächentopographie des Werkstücks kann erfindungsgemäß berührungslos, insbesondere auf optischem oder kapazitivem Wege, oder auch taktil erfasst werden.

Zum Erfassen der Oberflächentopographie des Werkstücks während der Werkstückbearbeitung werden nach der Erfindung im Wesentlichen zwei unterschiedliche Vorgehensweisen vorgeschlagen, bei denen das Werkstück zunächst unter Vorgabe eines vorläufigen Soll-Arbeitsabstands des Bearbeitungskopfs vom Werkstück bearbeitet wird. Der vorläufige Soll-Arbeitsabstand wird dabei vorzugsweise konservativ, d.h. großzügig, bemessen, um eine unnötige Kollision des Bearbeitungskopfs mit dem Werkstück zu vermeiden. Derartige Kollisionen wiegen in der Praxis schwerer, als ein zu Beginn des Bearbeitungsprozesses, beispielsweise aufgrund eines unnötig hohen Verbrauchs an einem Prozessfluid, unwirtschaftlicher Betrieb der Bearbeitungsvorrichtung.

Nach der einen von der Erfindung vorgeschlagenen Vorgehensweise wird die Oberflächentopographie des Werkstücks während des Bearbeitens des Werkstücks in einem Oberflächenerfassungsbereich erfasst, der in Bewegungsrichtung des Bearbeitungskopfs entlang einer steuerungsseitig vorgegebenen Soll-Bearbeitungsbahn zumindest teilweise vor einem jeweiligen Bearbeitungspunkt am Werkstück angeordnet ist. Der Oberflächenerfassungsbereich wird dabei, vorzugsweise synchronisiert zum Bearbeitungskopf, entlang einer vorgegebenen Soll-Bearbeitungsbahn des Bearbeitungskopfs gegenüber dem Werkstück bewegt. Die Oberflächentopographie des Werkstücks wird somit in einem dem Bearbeitungspunkt bzw. Bearbeitungsbereich des Werkstücks vorauseilenden Oberflächenausschnitt dynamisch erfasst. Eine dabei eingesetzte Sensorik kann zumindest einen direkt am Bearbeitungskopf der Bearbeitungsvorrichtung angeordneten, vorzugsweise kapazitiv oder optisch arbeitenden, Sensor aufweisen oder aber dieser wird mittels einer eigenständigen Mimik entlang der Soll-Bearbeitungsbahn bewegt.

Nach der anderen Vorgehensweise werden zum Bestimmen der Oberflächentopographie des Werkstücks Steuersignale zum Regeln des jeweiligen Arbeitsabstands des Bearbeitungskopfs vom Werkstück auf den vorgegebenen vorläufigen Soll-Arbeitsabstand oder aber die Abstandsregelbewegungen des Bearbeitungskopfs selbst erfasst. Die Abstandsregelung bzw. die Abstandsregelbewegungen des Bearbeitungskopfs erfolgen in Abhängigkeit von der jeweiligen Oberflächentopographie des Werkstücks entlang der vorgegebenen Soll-Bearbeitungsbahn. Da die Steuersignale von einer Steuerungseinheit zum Steuern der Abstandsregelbewegungen des Bearbeitungskopfs ohnehin vorliegen, können diese zum Bestimmen der Oberflächentopographie ohne Weiteres verwendet werden. Während des Bearbeitungsprozesses werden üblicherweise auch die Bewegungen des Bearbeitungskopfs entlang seiner Bearbeitungsachsen bei den am Markt befindlichen Bearbeitungsvorrichtungen erfasst. Dazu werden häufig Stellungssensoren zum zeitlich aufgelösten Bestimmen der jeweiligen Position des Bearbeitungskopfs entlang seiner Bewegungsachsen eingesetzt. Aus den aufgenommenen Daten können bei den Abstandsregelbewegungen von dem Bearbeitungskopf zurückgelegte Wegstrecken und Beschleunigungswerte ohne Weiteres ermittelt werden. Aus diesen Daten kann die Oberflächentopographie ohne zusätzliche Sensoren bestimmt werden. Dadurch kann das Verfahren auch bei existierenden Bearbeitungsvorrichtungen problemlos nachträglich implementiert werden.

Der geschwindigkeitsabhängige Schleppabstand wird vorzugsweise für die jeweilige Bewegungsgeschwindigkeit des Bearbeitungskopfs entlang seiner Bewegungsachsen vor dem Bearbeiten des Werkstücks (experimentell) ermittelt und in der Steuerungseinrichtung hinterlegt. Dies kann beispielsweise als Kennlinie, als Kennfeld für mehrere relevante Bewegungsgeschwindigkeiten oder auch in Form einer mathematischen Funktion erfolgen. Der Schleppabstand kann erfindungsgemäß zudem erst beim Bearbeiten des Werkstücks anhand der Bewegungen des Bearbeitungskopfs entlang seiner Bewegungsachsen bestimmt werden

Man beachte, dass der vorgegebene minimale Arbeitsabstand auf einer Interpolation auf Grundlage eines womöglich nicht für alle zu bearbeitenden Werkstückbereiche repräsentativen Oberflächenbereichs des Werkstücks bestimmt wird, soweit die Oberflächentopographie des Werkstücks nicht entlang der gesamten Soll-Bearbeitungsbahn des Bearbeitungskopfs erfasst und zumindest intervallweise zum Bestimmen eines (jeweiligen) minimalen Soll-Bearbeitungsabstands herangezogen wird. Ein diesbezüglich verbleibendes Restrisiko einer Kollision des Bearbeitungskopfs mit dem Werkstück kann dadurch nochmals weiter reduziert werden, dass der minimale Soll-Arbeitsabstand mit einem definierten Sicherheitszuschlag bestimmt wird. Der Sicherheitszuschlag wird dabei in seiner Größe vorzugsweise in Abhängigkeit von der zuvor bestimmten Oberflächentopographie und/oder dem zuvor bestimmten Schleppabstand des Bearbeitungskopfs bemessen.

Der vorgegebene minimale Soll-Arbeitsabstand wird nach einer Weiterbildung der Erfindung zusätzlich zum Regeln (weiterer) Betriebsparameter der Bearbeitungsvorrichtung herangezogen. So können insbesondere eine Leistung eines eingesetzten Generators zum Generieren eines beim Schweißen eingesetzten Schweißstroms oder eines Laserstrahls, eine Fokuslage des Laserstrahls und/oder eine Flussrate eines Prozessfluids in Abhängigkeit von dem vorgegebenen minimalen Soll-Arbeitsabstand des Bearbeitungskopfs vom Werkstück geregelt bzw. eingestellt werden. Insgesamt ist dies für die Wirtschaftlichkeit des Bearbeitungsprozesses sowie das primär maßgebliche Bearbeitungsergebnis von Vorteil.

Das vorgeschlagene Verfahren eignet sich gleichermaßen für Bearbeitungsprozesse, bei denen ein kontaktfrei arbeitender Bearbeitungskopf eingesetzt wird, d.h. insbesondere für thermische Trenn- und Schweißprozesse, bei denen ein Prozessfluid wie beispielsweise ein Inertgas (Schutzgas), ein Aktivgas oder ein Gemisch aus den genannten Gasen eingesetzt wird.

Die erfindungsgemäße Bearbeitungsvorrichtung zum Bearbeiten eines Werkstücks weist einen Bearbeitungskopf auf, der mit einer definierten Geschwindigkeit beabstandet zu einem zu bearbeitenden Werkstück bewegbar ist. Die Bearbeitungsvorrichtung weist eine Sensorik zum Erfassen einer Oberflächentopographie des Werkstücks und eine Steuerungseinheit auf, mittels derer die Bewegung des Bearbeitungskopfs gegenüber dem Werkstück steuerbar bzw. regelbar sind. Die Steuerungseinheit ist dabei zum Ausführen des vorstehend beschriebenen Verfahrens programmiert.

Nachfolgend wird die Erfindung anhand zweier in der Zeichnung wiedergegebener Ausführungsbeispiele näher erläutert. Die gezeigten und beschriebenen Ausführungsformen sind nicht als abschließende Aufzählung zu verstehen, sondern haben vielmehr beispielhaften Charakter für die Schilderung der Erfindung. Die Figuren der Zeichnung zeigen den erfindungsgemäßen Gegenstand stark schematisiert und sind nicht maßstäblich zu verstehen.

Es zeigen:
- Fig. 1: eine Laserbearbeitungsvorrichtung mit einem Bearbeitungskopf, der zum Bearbeiten eines Werkstücks mit definiertem Abstand gegenüber dem Werkstück bewegbar ist und der eine Sensorik mit einem Abstandssensor zum Erfassen einer Oberflächentopographie des Werkstücks aufweist, in Seitenansicht;
- Fig. 2: eine zu Fig. 1 ähnliche Laserbearbeitungsvorrichtung mit einem Bearbeitungskopf, der zum Erfassen der Oberflächentopographie des zu bearbeitenden Werkstücks eine Sensorik mit einem optischen Sensor aufweist, dessen Oberflächenerfassungsbereich in Bewegungsrichtung des Bearbeitungskopfs zumindest teilweise vor einem jeweiligen Bearbeitungspunkt am Werkstück angeordnet ist und der mit dem Bearbeitungskopf entlang der Soll-Bearbeitungsbahn gegenüber dem Werkstück synchronisiert mitbewegbar ist, in Seitenansicht.
- Fig. 3: die Soll-Bearbeitungsbahn aus Fig. 2 in Bezug auf Bewegungsachsen des Bearbeitungskopfs, wobei der Bearbeitungskopf eine von der Soll-Position abweichende Ist-Position aufweist, in Draufsicht; und
- Fig. 4: ein Flussdiagramm mit den einzelnen Schritten des erfindungsgemäßen Verfahrens zum Bearbeiten eines Werkstücks.

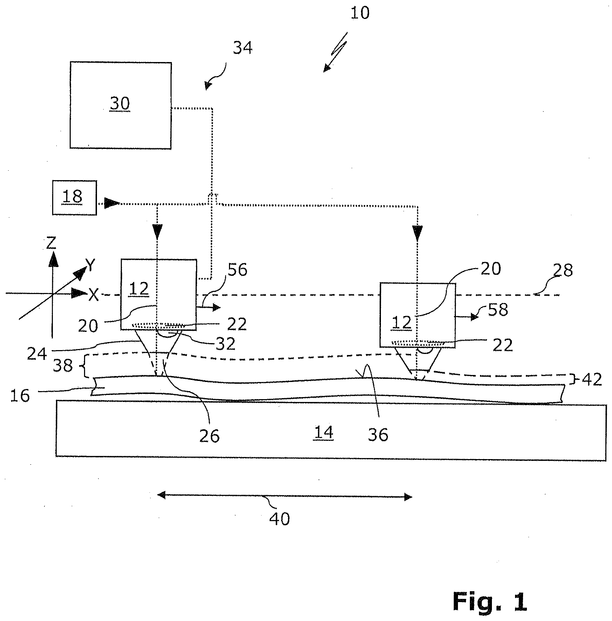

**Fig. 1** zeigt eine als Laserbearbeitungsvorrichtung ausgebildete Bearbeitungsvorrichtung **10** mit einem Bearbeitungskopf **12,** der von einem auf einer Werkstückhalterung **14** angeordneten Werkstück **16,** hier einem Metallblech, beabstandet entlang dreier (Haupt-) Bewegungsachsen X, Y, Z gegenüber dem Werkstück 16 bewegbar ist.

Eine Laserstrahlquelle **18** dient zum Erzeugen eines zum thermischen Trennschneiden des Werkstücks 16 bestimmten Laserstrahls **20.** Der Laserstrahl 20 ist mittels des Bearbeitungskopfs 12 über das Werkstück 16 führbar. Eine im Bearbeitungskopf 12 angeordnete Fokussierlinse **22** dient der Bündelung des Laserstrahls 20 auf dem Werkstück 16. Am Bearbeitungskopf 12 ist eine Düse **24** angeordnet, über die ein Prozessfluid **26,** hier ein Inertgas, in Richtung auf das Werkstück 16 führbar ist. Das Prozessfluid 26 dient einem Schutz der Fokussierlinse 22 vor einer Beschädigung durch beim Bearbeiten des Werkstücks 16 anfallende und in der Fig. 1 nicht näher wiedergegebene Schmelzpartikel und insbesondere beim thermischen Schmelzschneiden dem Schmelzaustrieb.

Zum Steuern/Regeln der Bewegungen des Bearbeitungskopfs 12 entlang einer vorgegebenen Soll-Bearbeitungsbahn **28** dient eine Steuerungseinheit **30.** Die Steuerungseinheit 30 ist mit einem kapazitiv arbeitenden Abstandssensor **32** gekoppelt, der am Bearbeitungskopf 12 angeordnet ist. Dadurch wird ein Regeln eines jeweiligen Arbeitsabstands des Bearbeitungskopfs 12 auf einen steuerungsseitig vorgegebenen Soll-Arbeitsabstand ermöglicht. Die Steuerungseinheit 30 bildet zusammen mit dem Abstandssensor 32 eine Sensorik **34,** mittels derer eine Oberflächentopographie des Werkstücks 16 erfasst werden kann, wie dies weiter unten näher beschreiben wird. Die Steuerungseinheit 30 dient darüber hinaus dem Steuern bzw. Regeln weiterer Betriebsparameter der Bearbeitungsvorrichtung 10, insbesondere eines jeweiligen Mengenflusses des aus der Düse 24 herausgeführten Prozessfluids 26 und einer Leistungsabgabe der Laserstrahlquelle 18.

In der Fig. 1 ist der Bearbeitungskopf 12 während eines Bearbeitens des Werkstücks 16 zu zwei unterschiedlichen Zeitpunkten gezeigt.
Auf der in der Fig. linken Seite ist der Bearbeitungskopf 12 während des ausschnittsweisen Erfassens der Oberflächentopographie d.h. der geometrischen Gestalt und Lage der Oberfläche **36** des Werkstücks 16 in Bezug auf die (Haupt-) Bewegungsachsen X, Y, Z des Bearbeitungskopfs 12 gezeigt. Ein für diesen Betriebsmodus steuerungsseitig vorgegebener vorläufiger Soll-Arbeitsabstand ist mit **38** gekennzeichnet.

Auf der in der Fig. 1 rechten Seite ist der Bearbeitungskopf 12 zu einem Bearbeitungszeitpunkt gezeigt, zu dem die Oberflächentopographie des Werkstücks 16 ausschnittsweise, d.h. hier beispielsweise über eine Wegstrecke **40** entlang der X-Bewegungsachse des Bearbeitungskopfs 12, erfasst wurde. Der Arbeitsabstand des Bearbeitungskopfs 12 wurde nach dem Bestimmen eines minimalen Soll-Arbeitsabstands **42** für das (weitere) Bearbeiten des Werkstücks 16 auf diesen minimalen Soll-Arbeitsabstand 42 eingeregelt.

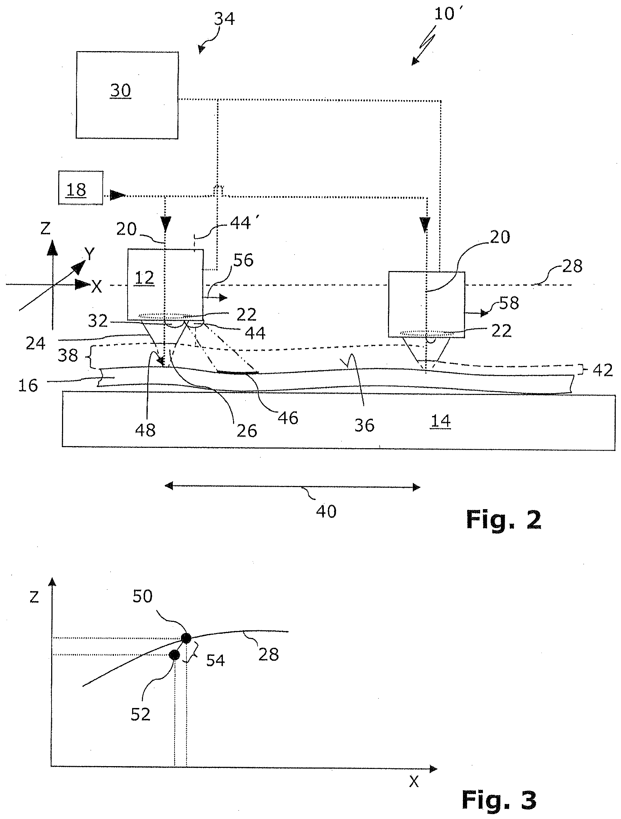

**Fig. 2** zeigt ein weiteres Ausführungsbeispiel einer Bearbeitungsvorrichtung **10',** die sich von der vorstehend erläuterten Bearbeitungsvorrichtung im Wesentlichen darin unterscheidet, dass diese neben dem Abstandssensor 32 zum Erfassen eines jeweiligen Arbeitsabstands des Bearbeitungskopfs 12 vom Werkstück 16 zusätzlich einen optischen Sensor **44** aufweist. Der optische Sensor 44 ist am Bearbeitungskopf angeordnet und gegenüber diesem um eine Drehachse **44'** verdrehbar. Der optische Sensor dient dem vorausschauenden Erfassen der Oberflächentopographie des Werkstücks 12 in Bezug auf die Bewegungsachsen X, Y, Z des Bearbeitungskopfs 12. Ein werkstückseitiger Oberflächenerfassungsbereich **46** des Sensors 44 kann durch entsprechend (und von der Steuerungseinheit 30) gesteuertes Verdrehen des Sensors 44 gegenüber dem Bearbeitungskopf 12 zu einer jeweiligen Bewegungsrichtung des Bearbeitungskopfs 12 entlang dessen vorgegebener Soll-Bearbeitungsbahn 28 ausgerichtet werden. Dadurch ist der Oberflächenerfassungsbereich 46 zumindest teilweise vor einem jeweiligen Bearbeitungspunkt **48** am Werkstück 16 positionierbar. Der optische Sensor 44 und somit dessen Oberflächenerfassungsbereich 46 sind mit dem Bearbeitungskopf 12 entlang der Soll-Bearbeitungsbahn 28 gegenüber dem Werkstück 16 synchronisiert mitbewegbar.

In **Fig. 3** ist die Soll-Bearbeitungsbahn 28 in Bezug auf die Bewegungsachsen X, Z des Bearbeitungskopfs in einem beispielhaften Ausschnitt gezeigt. Eine Soll-Lage des Bearbeitungskopfs auf der Soll-Bearbeitungsbahn 28 ist mit 50 bezeichnet. Die tatsächliche Lage (Ist-Lage) 52 des Bearbeitungskopfs weist während des Bearbeitens des Werkstücks einen zu dessen Soll-Lage auf der Soll-Bearbeitungsbahn 28 geschwindigkeitsabhängigen Schleppabstand **54** auf. Der Schleppabstand des Bearbeitungskopfs kann für die definierte Geschwindigkeit, mit der der Bearbeitungskopf beim Bearbeiten des Werkstücks entlang der Soll-Bearbeitungsbahn gegenüber dem Werkstück bewegt wird, oder auch für mehrere für das Bearbeiten des Werkstücks auswählbare Bewegungsgeschwindigkeiten des Bearbeitungskopfs in der Steuerungseinheit hinterlegt, d.h. in dieser abgespeichert, sein. Dies kann in Form einer Kennlinie, eines Kennfelds oder auch einer mathematischen Funktion erfolgen. Der Schleppabstand 54 wird, wie nachstehend dargelegt wird, beim Bestimmen des minimalen Soll-Arbeitsabstands 42 des Bearbeitungskopfs vom Werkstück berücksichtigt.

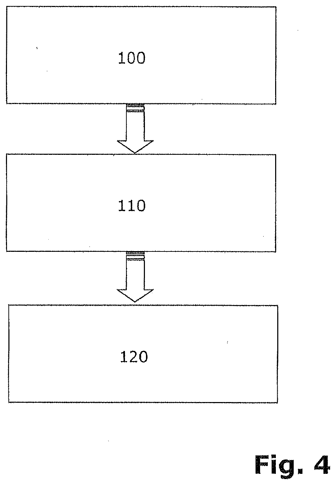

Das erfindungsgemäße Verfahren zum Bearbeiten des Werkstücks wird nachstehend unter zusätzlicher Bezugnahme auf **Fig. 4** erläutert.
Zum Bearbeiten des Werkstücks 16 mit einem für eine gewählte Bewegungsgeschwindigkeit des Bearbeitungskopfs 12 entlang der Soll-Bearbeitungsbahn 28 jeweils betriebsoptimalen Arbeitsabstand des Bearbeitungskopfs 12 von dem Werkstück 16 wird in einem ersten Arbeitschritt **100** die Oberflächentopographie des Werkstücks 16 erfasst. Dazu wird das Werkstück 16 unter Vorgabe eines vorläufigen Soll-Arbeitsabstand 38 des Bearbeitungskopfs 12 zum Werkstück 16 mit dem Laserstrahl 20 bearbeitet. Der vorläufige Soll-Arbeitsabstand 38 wird vorzugsweise konservativ gewählt, d.h. dieser weist einen derart großzügig bemessenen Wert, beispielsweise 1 bis 1, 5 mm auf, um Kollisionen des Bearbeitungskopfs 12 mit dem Werkstück 16 sicher zu vermeiden. Der Bearbeitungskopf 12 wird während dieser Erfassungsphase mit der definierten Geschwindigkeit entlang der steuerungsseitig vorgegebenen Soll-Bearbeitungsbahn 28 in Pfeilrichtung **56** gegenüber dem Werkstück 16 bewegt. Dabei wird ein jeweiliger Arbeitsabstand des Bearbeitungskopfs 12 vom Werkstück 16 mittels des Abstandssensors 32 erfasst und mittels der Steuerungseinheit 30 auf den vorläufigen Soll-Arbeitsabstand geregelt. Zugleich werden jeweilige Achspositionen des Bearbeitungskopfs 12 entlang dessen Bewegungsachsen X, Y, Z von der Steuerungseinheit 30 zeitlich aufgelöst erfasst.

In einem nachfolgenden Arbeitsschritt **110** wird der minimale Soll-Arbeitsabstand 42 des Bearbeitungskopfs 12 vom Werkstück 16 anhand der zuvor erfassten Oberflächentopographie des Werkstücks 16 sowie des für die gewählte Bewegungsgeschwindigkeit (Bearbeitungsgeschwindigkeit) zugehörigen Schleppabstands 54 des Bearbeitungskopfs berechnet. Dabei wird ein vorgegebener Sicherheitszuschlag von vorliegend 0,05 Millimeter berücksichtigt. Der Sicherheitszuschlag kann auch größer oder kleiner bemessen sein.

In einem weiteren Arbeitsschritt **120** wird das Werkstück 16 unter Vorgabe des bestimmten minimalen Soll-Arbeitsabstands 42 entlang der vorgegebenen Soll-Bearbeitungsbahn 28 in Pfeilrichtung **58** (weiter)bearbeitet.

In Abhängigkeit von dem minimalen Soll-Arbeitsabstand 42 können weitere Betriebsparameter der Bearbeitungsvorrichtung 10, 10', insbesondere eine Leistungsabgabe der Laserstrahlquelle 18, eine Fokuslage des Laserstrahls 20 gegenüber dem Werkstück 16 und ein Druck und damit indirekt ein Mengenfluss des aus der Düse 24 herausgeführten Prozessfluids 26 geregelt werden.

Es versteht sich, dass im Falle der in Fig. 2 wiedergegebenen Bearbeitungsvorrichtung 10' die Oberflächentopographie des Werkstücks 16 von der Steuerungseinheit 30 anhand der vom optischen Sensor 44 generierten Messdaten ermittelt und zum Bestimmen des minimalen Soll-Arbeitsabstand 38 des Bearbeitungskopfs 12 vom Werkstück 16 herangezogen wird/werden kann.

## Patentansprüche

1. Verfahren zum Bearbeiten eines Werkstücks (16) mit einer Bearbeitungsvorrichtung (10; 10'), die einen mit einer definierten Geschwindigkeit beabstandet zur Werkstückoberfläche (36) bewegbaren Bearbeitungskopf (12) aufweist, umfassend die folgenden Schritte:
A.) Zumindest ausschnittsweises Erfassen (100) einer Oberflächentopographie des zu bearbeitenden Werkstücks (16) vor oder während des Bearbeitens des Werkstücks;
B.) Bestimmen (110) eines minimalen Soll-Arbeitsabstands (42) des Bearbeitungskopfs (12) vom Werkstück (16) anhand der zuvor erfassten Oberflächentopographie des Werkstücks (16) ; und
C.) Bearbeiten (120) bzw. Weiterbearbeiten des Werkstücks (16) unter Vorgabe des bestimmten minimalen Soll-Arbeitsabstands (42) des Bearbeitungskopfs (12) zum Werkstück (16); und **dadurch gekennzeichnet, dass** im Schritt B der minimale Soll-Arbeitsabstand (42) anhand eines für die definierte Geschwindigkeit zugehörigen Schleppabstands (54) des Bearbeitungskopfs (12) bestimmt wird.

2. Verfahren nach einem der vorhergehenden Ansprüche, **dadurch gekennzeichnet, dass** die Oberflächentopographie des zu bearbeitenden Werkstücks (16) berührungslos oder taktil erfasst wird.

3. Verfahren nach Anspruch 1 oder 2, **dadurch gekennzeichnet, dass** das Werkstück (16) zum Bestimmen seiner Oberflächentopographie unter Vorgabe eines vorläufigen Soll-Arbeitsabstands (38) des Bearbeitungskopfs (12) zum Werkstück (16) bearbeitet wird, wobei die Oberflächentopographie des Werkstücks (16) mit einer Sensorik (34) in einem Oberflächenerfassungsbereich (46) erfasst wird, der in Bewegungsrichtung des Bearbeitungskopfs (12) entlang einer vorgegebenen Soll-Bearbeitungsbahn (28) zumindest teilweise vor einem jeweiligen Bearbeitungspunkt (48) am Werkstück (16) angeordnet ist und wobei der Oberflächenerfassungsbereich (46) mit dem Bearbeitungskopf (12) entlang der Soll-Bearbeitungsbahn (28) synchronisiert mitbewegt wird.

4. Verfahren nach Anspruch 1 oder 2, **dadurch gekennzeichnet, dass** das Werkstück (16) zum Bestimmen seiner Oberflächentopographie unter Vorgabe eines vorläufigen Soll-Arbeitsabstands (38) des Bearbeitungskopfs (12) vom Werkstück (16) bearbeitet wird, wobei die Oberflächentopographie des Werkstücks anhand von Steuersignalen zum Regeln eines jeweiligen Arbeitsabstands des Bearbeitungskopfs (12) vom Werkstück (16) auf den vorläufigen Soll-Arbeitsabstand (38) oder anhand von Abstandsregelbewegungen des Bearbeitungskopfs (12) gegenüber dem Werkstück (16) erfasst wird.

5. Verfahren nach Anspruch 4, **dadurch gekennzeichnet, dass** die Abstandsregelbewegungen durch Bestimmen von Beschleunigungswerten des Bearbeitungskopfs (12) und/oder zurückgelegten Wegstrecken des Bearbeitungskopfs (12) entlang zumindest einer seiner Bewegungsachsen (X, Y, Z) erfasst werden.

6. Verfahren nach einem der vorhergehenden Ansprüche, **dadurch gekennzeichnet, dass** der Schleppabstand (54) des Bearbeitungskopfs (12) vor dem Bearbeiten des Werkstücks (16) bestimmt wird.

7. Verfahren nach einem der Ansprüche 1 bis 5, **dadurch gekennzeichnet, dass** der Schleppabstand (54) des Bearbeitungskopfs während des Bearbeitens des Werkstücks (16) ermittelt wird.

8. Verfahren nach einem der vorhergehenden Ansprüche, **dadurch gekennzeichnet, dass** der minimale Soll-Arbeitsabstand (42) mit einem definierten Sicherheitszuschlag bestimmt wird.

9. Verfahren nach Anspruch 8, **dadurch gekennzeichnet, dass** der Sicherheitszuschlag in Abhängigkeit von der zuvor erfassten Oberflächentopographie des Werkstücks (16) und/oder des zuvor ermittelten Schleppabstands (54) des Bearbeitungskopfs (12) bemessen wird.

10. Verfahren nach einem der vorhergehenden Ansprüche, **dadurch gekennzeichnet, dass** der vorgegebene minimale Sollabstand (42) zum Regeln von Betriebsparametern der Bearbeitungsvorrichtung (10, 10') herangezogen wird.

11. Bearbeitungsvorrichtung (10, 10') zum Bearbeiten eines Werkstücks (16), mit einem Bearbeitungskopf (12), der mit einer definierten Geschwindigkeit beabstandet zu einem zu bearbeitenden Werkstück (16) bewegbar ist, mit einer Sensorik (34) zum Erfassen einer Oberflächentopographie des Werkstücks (16) und
mit einer Steuerungseinheit (30) zum Steuern/Regeln der Bewegung des Bearbeitungskopfs (12) gegenüber dem Werkstück (16),
**dadurch gekennzeichnet, dass**
die Steuerungseinrichtung (30) zur Durchführung eines Verfahrens nach einem der vorhergehenden Ansprüche programmiert ist.

12. Bearbeitungsvorrichtung nach Anspruch 11, **dadurch gekennzeichnet, dass** die Sensorik (34) einen Abstandssensor (32) zum Messen eines Arbeitsabstands des Bearbeitungskopfs (12) zum Werkstück (16) aufweist.

13. Bearbeitungsvorrichtung nach Anspruch 11 oder 12, **dadurch gekennzeichnet, dass** der Bearbeitungskopf (12) eine Düse (24) für ein Prozessfluid (26) aufweist.

14. Bearbeitungsvorrichtung nach einem der Ansprüche 11 bis 13, **dadurch gekennzeichnet, dass** die Bearbeitungsvorrichtung (10, 10') eine Laserbearbeitungsvorrichtung ist.

## Claims

1. Method for processing a workpiece (16) with a processing device (10, 10') which has a processing head (12) which can be moved at a defined speed and distance from the workpiece surface (36), comprising the following steps:
A) at least partially detecting (100) a surface topography of the workpiece (16) to be processed before or during the processing of the workpiece;
B) determining (110) a minimum desired operating distance (42) of the processing head (12) from the workpiece (16) based on the previously detected surface topography of the workpiece (16); and
C) processing (120) or further processing the workpiece (16) based on the determined minimum desired operating distance (42) of the processing head (12) from the workpiece (16); and **characterized in that** in step B the minimum desired operating distance (42) is determined on the basis of a trailing spacing (54) of the processing head (12) associated with the defined speed.

2. Method according to the preceding claim, **characterised in that** the surface topography of the workpiece (16) to be processed is detected in a contact-free or tactile manner.

3. Method according to claim 1 or claim 2, **characterised in that** the workpiece (16), in order to determine the surface topography thereof, is processed on the basis of a preliminary desired operating distance (38) of the processing head (12) from the workpiece (16), the surface topography of the workpiece (16) being detected with a sensor system (34) in a surface detection region (46) which is arranged at least partially upstream of a respective processing location (48) on the workpiece (16) in the movement direction of the processing head (12) along a predetermined desired operating path (28), and the surface detection region (46) being moved with the processing head (12) along the desired processing path (28) in a synchronised manner.

4. Method according to claim 1 or claim 2, **characterised in that** the workpiece (16), in order to determine the surface topography thereof, is processed on the basis of a preliminary desired operating distance (38) of the processing head (12) from the workpiece (16), the surface topography of the workpiece being detected on the basis of control signals for adjusting a respective operating distance of the processing head (12) from the workpiece (16) to the preliminary desired operating distance (38) or on the basis of distance adjustment movements of the processing head (12) with respect to the workpiece (16).

5. Method according to claim 4, **characterised in that** the distance adjustment movements are detected by determining acceleration values of the processing head (12) and/or paths of the processing head (12) travelled along at least one of the movement axes (X, Y, Z) thereof.

6. Method according to any one of the preceding claims, **characterised in that** the trailing spacing (54) of the processing head (12) is determined before the workpiece (16) is processed.

7. Method according to any one of the claims 1 to 5, **characterised in that** the trailing spacing (54) of the processing head is established during the processing of the workpiece (16).

8. Method according to any one of the preceding claims, **characterised in that** the minimum desired operating distance (42) is determined with a defined safety allowance.

9. Method according to claim 8, **characterised in that** the safety allowance is sized in accordance with the previously detected surface topography of the workpiece (16) and/or the previously established trailing spacing (54) of the processing head (12).

10. Method according to any one of the preceding claims, **characterised in that** the determined minimum desired distance (42) is used to adjust operating parameters of the processing device (10, 10').

11. Processing device (10, 10') for processing a workpiece (16) having a processing head (12) which can be moved at a defined speed and distance from a workpiece (16) to be processed, comprising
a sensor system (34) for detecting a surface topography of the workpiece (16) and
a control unit (30) for controlling/adjusting the movement of the processing head (12) with respect to the workpiece (16),
**characterized in that**
the control unit (30) is programmed in order to carry out a method according to any one of the preceding claims.

12. Processing device according to claim 11, **characterised in that** the sensor system (34) has a distance sensor (32) for measuring an operating distance of the processing head (12) from the workpiece (16).

13. Processing device according to claim 11 or 12, **characterised in that** the processing head (12) has a nozzle (24) for a process fluid (26).

14. Processing device according to any one of claims 11 to 13, **characterised in that** the processing device (10, 10') is a laser processing device.

## Revendications

1. Procédé pour l'usinage d'une pièce (16) avec un dispositif d'usinage (10, 10') qui présente une tête d'usinage (12) pouvant être déplacée avec une vitesse définie à distance de la surface (36) de la pièce, comprenant les étapes suivantes :
A) détection (100) au moins partielle d'une topographie de surface de la pièce (16) à usiner, avant ou pendant l'usinage de la pièce ;
B) détermination (110) d'une distance de travail de consigne minimale (42) entre la tête d'usinage (12) et la pièce (16), à l'aide de la topographie de surface de la pièce (16) préalablement détectée ; et
C) usinage (120) ou poursuite de l'usinage de la pièce (16) en allouant la distance de travail de consigne minimale (42) déterminée entre la tête d'usinage (12) et la pièce (16),
**caractérisé en ce que**, à l'étape B, la distance de travail de consigne minimale (42) est déterminée à l'aide d'une distance de poursuite (54) de la tête d'usinage (12) qui est associée à la vitesse définie.

2. Procédé selon la revendication 1, **caractérisé en ce que** la topographie de surface de la pièce (16) à usiner est détectée sans contact ou de manière tactile.

3. Procédé selon la revendication 1 ou 2, **caractérisé en ce que** la pièce (16) est, afin de déterminer sa topographie de surface, usinée en allouant une distance de travail de consigne provisoire (38) entre la tête d'usinage (12) et la pièce (16), sachant que la topographie de surface de la pièce (16) est détectée avec un équipement de détection (34) dans une région (46) de détection de surface qui est disposée, dans la direction de déplacement de la tête d'usinage (12), le long d'une trajectoire d'usinage de consigne prédéfinie (28), au moins partiellement avant un point d'usinage respectif (48) sur la pièce (16), et sachant que la région (46) de détection de surface est déplacée de manière synchronisée avec la tête d'usinage (12) le long de la trajectoire d'usinage de consigne (28).

4. Procédé selon la revendication 1 ou 2, **caractérisé en ce que** la pièce (16) est, afin de déterminer sa topographie de surface, usinée en allouant une distance de travail de consigne provisoire (38) entre la tête d'usinage (12) et la pièce (16), sachant que la topographie de surface de la pièce est détectée à l'aide de signaux de commande pour réguler une distance de travail respective entre la tête d'usinage (12) et la pièce (16) à la distance de travail de consigne provisoire (38), ou à l'aide de déplacements de régulation de distance de la tête d'usinage (12) par rapport à la pièce (16).

5. Procédé selon la revendication 4, **caractérisé en ce que** les déplacements de régulation de distance sont détectés en déterminant des valeurs d'accélération de la tête d'usinage (12) et/ou des parcours accomplis par la tête d'usinage (12) le long d'au moins un de ses axes de déplacement (X, Y, Z).

6. Procédé selon l'une des revendications précédentes, **caractérisé en ce que** la distance de poursuite (54) de la tête d'usinage (12) est déterminée avant l'usinage de la pièce (16).

7. Procédé selon l'une des revendications 1 à 5, **caractérisé en ce que** la distance de poursuite (54) de la tête d'usinage est déterminée pendant l'usinage de la pièce (16).

8. Procédé selon l'une des revendications précédentes, **caractérisé en ce que** la distance de travail de consigne minimale (42) est déterminée avec une marge de sécurité définie.

9. Procédé selon la revendication 8, **caractérisé en ce que** la marge de sécurité est dimensionnée en fonction de la topographie de surface préalablement détectée de la pièce (16) et/ou de la distance de poursuite (54) préalablement déterminée de la tête d'usinage (12).

10. Procédé selon l'une des revendications précédentes, **caractérisé en ce que** la distance de travail de consigne minimale (42) prédéfinie est utilisée pour réguler des paramètres d'exploitation du dispositif d'usinage (10, 10').

11. Dispositif d'usinage (10, 10') pour l'usinage d'une pièce (16),
avec une tête d'usinage (12), qui peut être déplacée avec une vitesse définie à distance d'une pièce (16) à usiner,
avec un équipement de détection (34) pour détecter une topographie de surface de la pièce (16),
et avec une unité de commande (30) pour commander/réguler le déplacement de la tête d'usinage (12) par rapport à la pièce (16),
**caractérisé en ce que** l'équipement de commande (30) est programmé pour exécuter un procédé selon l'une des revendications précédentes.

12. Dispositif d'usinage selon la revendication 11, **caractérisé en ce que** l'équipement de détection (34) présente un capteur de distance (32) pour mesurer une distance de travail entre la tête d'usinage (12) et la pièce (16).

13. Dispositif d'usinage selon la revendication 11 ou 12, **caractérisé en ce que** la tête d'usinage (12) présente une buse (24) pour un fluide de processus (26).

14. Dispositif d'usinage selon l'une des revendications 11 à 13, **caractérisé en ce que** le dispositif d'usinage (10, 10') est un dispositif d'usinage au laser.
